# EUROPÄISCHE PATENTSCHRIFT

(11) **EP 2 671 452 B1**
(45) Veröffentlichungstag und Bekanntmachung des Hinweises auf die Patenterteilung: **20.01.2021**
(21) Anmeldenummer: 13169829.2
(22) Anmeldetag: 30.05.2013
(51) Int. Cl.: B01D 5/00, A21B 1/10, G01F 23/58

(54) **KONDENSAT-ABFÜLLSTATION FÜR BÄCKEREIBACKÖFEN**
CONDENSATE DISCHARGE STATION FOR BAKERY OVENS
STATION DE DÉCHARGE DE CONDENSAT POUR FOURS DE BOULANGERIE

(30) Priorität: 06.06.2012 DE 202012005535 U
(43) Veröffentlichungstag der Anmeldung: 11.12.2013
(73) Patentinhaber: Kaak Groep B.V., 7061 GA Terborg (NL)
(72) Erfinder: Zapp, Uwe Günther, 21271 Asendorf (DE)
(74) Vertreter: Glawe, Delfs, Moll

(56) Entgegenhaltungen:
- WO-A1-93/00290
- DE-A1- 3 318 663
- DE-A1- 4 235 132
- DE-A1-102006 043 287
- DE-A1-102009 048 062
- FR-A1- 2 551 988
- GB-A- 932 515
- US-A- 1 192 134
- US-A- 1 267 982
- US-A- 2 348 478

## Beschreibung

Die Erfindung betrifft eine Kondensat-Abfüllstation für Bäckereibacköfen, die einen ersten Behälter mit einem Auslassventil und einen zweiten Behälter mit einer Einlassöffnung umfasst.

Moderne Bäckereibacköfen nutzen Thermoöle für die Wärmeübertragung zwischen der Heizeinrichtung und dem Backraum. Während der Nutzung des Backofens werden Thermoöle verunreinigt. Zur Reinigung der Thermoöle werden diese destilliert, sodass ein Thermoölkondensat, das die Verunreinigungen enthält, in einem Auffangbehälter abgeschieden wird. Das Thermoölkondensat muss regelmäßig abgelassen werden, um ein Überlaufen des Auffangbehälters zu verhindern.

In bekannten Anlagen wird das Thermoölkondensat gleich einem Ölwechsel bei einem Kraftfahrzeug in einen Eimer oder ein Entsorgungsfass abgelassen. Dabei wird dem Gefahrenpotential des Thermoölkondensats nicht Rechnung getragen. Das Thermoölkondensat scheidet Leichtsiedergase aus und weist einen Flammpunkt zwischen 0 und 25°C auf. Daher kann es leicht durch Funkenschlag entzündet werden, insbesondere bei Sprühnebelbildung. Dabei besteht erhebliche Explosionsgefahr

DE 10 2009 048062 A1 wird als nächstliegende Stand der Technik angesehen und offenbart eine Wärmeträgerölanlage sowie ein Verfahren zum Betreiben einer Wärmeträgerölanlage.

Die Aufgabe der vorliegenden Erfindung ist damit die Unfallgefahr bei dem Umfüllen des Kondensats zu verringern und damit die Sicherheit der Handhabung bei der Wartung zu erhöhen.

Die Aufgabe wird gelöst durch die Merkmale der unabhängigen Ansprüche. Vorteilhafte Weiterbildungen sind Gegenstand der abhängigen Ansprüche.

Die Erfindung betrifft eine Kondensat-Abfüllstation für Bäckereibacköfen umfassend: einen ersten Behälter mit einem Auslassventil und einen zweiten Behälter mit einer Einlassöffnung, wobei die Kondensat-Abfüllstation einen Verschluss für den zweiten Behälter mit einer ersten und zweiten Durchlassöffnung, der an der Einlassöffnung angeordnet ist; ein Füllrohr, das in der ersten Durchlassöffnung angeordnet ist, wobei das Füllrohr außerhalb des zweiten Behälters eine Fluideinlassöffnung aufweist; eine Fluidleitung zwischen der Fluideinlassöffnung und dem Auslassventil; und ein Entlüftungsrohr aufweist, das in der zweiten Durchlassöffnung angeordnet ist.

Die Erfindung beruht auf den Gedanken die Bildung von Sprühnebel beim Ablassen des Thermoölkondensats durch eine geschlossene Umfüllverbindung zu verhindern und den Kontakt des Thermoölkondensats zur sauerstoffreichen Umgebungsluft zu verringern. Der erste Behälter weist dabei das abzulassende Thermoölkondensat auf. Zwischen dem Auslassventil dieses Behälters und der Einlassöffnung des zweiten Behälters, in den das Thermoölkondensat eingefüllt werden soll, ist eine Fluidleitung angeordnet. Diese Fluidleitung verbindet das Auslassventil mit der Fluideinlassöffnung des Füllrohrs, das in der ersten Durchlassöffnung des Verschlusses angeordnet ist. Weiter stellt die Erfindung einen zentralen Anschluss für die Befüllung und Entlüftung an den zweiten Behälter zur Verfügung. Das Wartungspersonal muss lediglich den Verschluss an die Einlassöffnung des zweiten Behälters anbringen und die Fluidleitung zwischen dem ersten und zweiten Behälter installieren. Damit werden Fehler bei der Handhabung vermieden und die Handhabung vereinfacht.

Erfindungsgemäß reicht das Füllrohr bis zum Boden des zweiten Behälters, sodass ablaufendes Thermoöl nur eine kurze Strecke im freien Fall zurücklegt. Unter einem bis zum Boden des zweiten Behälters reichenden Rohr wird dabei verstanden, dass ein offenes Ende des Rohrs einen Abstand von weniger als 30 cm über dem Boden aufweist. Auf dieser kurzen Strecke ist die Bildung von Sprühnebel nicht möglich. Damit wird die Explosionsgefahr während des Wechsels des Thermoölkondensats vermindert und die Sicherheit der Handhabung beim Ölwechsel erhöht.

Weiter ist es zweckmäßig, dass der Verschluss mit einer Füllstandsanzeige versehen ist. Dabei kann vorzugsweise eine Messöffnung am Entlüftungsrohr vorgesehen sein, in der die Füllstandsanzeige angeordnet ist. Die Füllstandsanzeige umfasst einen Schwimmkörper, eine Anzeigevorrichtung und ein Signalübertragungselement. Der Schwimmkörper ist innerhalb des zweiten Behälters auf der Oberfläche des zu entsorgenden Thermoölkondensats angeordnet und schwimmt auf dessen Oberfläche. Das Signalübertragungselement ist zwischen dem Schwimmkörper und der Anzeigevorrichtung innerhalb des Entlüftungsrohrs angeordnet und verbindet sie. Die Anzeigevorrichtung ist an der Messöffnung außerhalb des Fasses angeordnet. Damit kann von außen der Füllstand des zweiten Behälters an Hand der Füllstandsanzeige abgelesen werden.

Vorteilhafterweise weist das Füllrohr außerhalb des zweiten Behälters zusätzlich ein Spülgaseinlass auf. Durch den Spülgaseinlass kann Gas, insbesondere reaktionsträges Gas wie Stickstoff, in den zweiten Behälter eingeleitet werden. Damit kann die Konzentration von Sauerstoff in dem zweiten Behälter verringert werden, sodass die Explosionsgefahr weiter vermindert wird. Der Spülgaseinlass kann dabei mit Vorteil ein Spülgasventil aufweisen.

Vorteilhafterweise ist eine Steuereinheit vorgesehen, die über Signalübertragungskabel an die Füllstandsanzeige, das Auslassventil und das Spülgasventil angeschlossen ist. Die Steuereinrichtung kann damit selbsttätig die Ventile öffnen und schließen sowie die Füllstandsanzeige auslesen. Die Ventile sind dabei fernsteuerbar ausgebildet. Der Umfüllvorgang des Thermoölkondensats kann von der Steuereinrichtung damit selbsttätig vorgenommen werden, ohne das Bedienpersonal den Vorgang überwachen muss. Dies hat den Vorteil, dass im Falle eines Unfalls keine Personenschäden auftreten.

In einer weiteren vorteilhaften Ausführungsform weisen alle Elemente der Kondensat-Abfüllstation, die stromleitend sind, Erdungsklemmen auf. Durch die Erdungsklemmen wird Funkenschlag, der zu einer Entzündung des Thermoölkondensats führen kann, verhindert.

Weiter ist mit Vorteil der Zweitbehälter als Wechselbehälter, vorzugsweise als ein Fass, ausgebildet. Dies ermöglicht eine leichtere Handhabung und sicherere Entsorgung des Thermoölkondensats nach dem Umfüllen.

Es ist weiter zweckmäßig, die Kondensat-Abfüllstation für Wärmeträgeranlagen vorzusehen, die mit organischen Fluiden befüllt sind.

Die Erfindung umfasst weiter einen Bäckereibackofen, der einen Backraum mit einer Ofentür, ein Heizmodul, ein Fluidfördersystem, und eine erfindungsgemäßen Kondensat-Abfüllstation aufweist.

Zur näheren Beschreibung wird auf vorstehende Erläuterungen verwiesen.

Zur näheren Beschreibung wird auf vorstehende Erläuterungen verwiesen.

Die Erfindung wird im Folgenden unter Bezugnahme auf die Zeichnung näher erläutert, die ein vorteilhaftes Ausführungsbeispiel veranschaulichen. Es zeigen:
- Fig. 1:: eine schematische Darstellung der Kondensat-Abfüllstation;
- Fig. 2:: eine schematische Darstellung des Verschlusses mit Füllrohr und Entlüftungsrohr; und

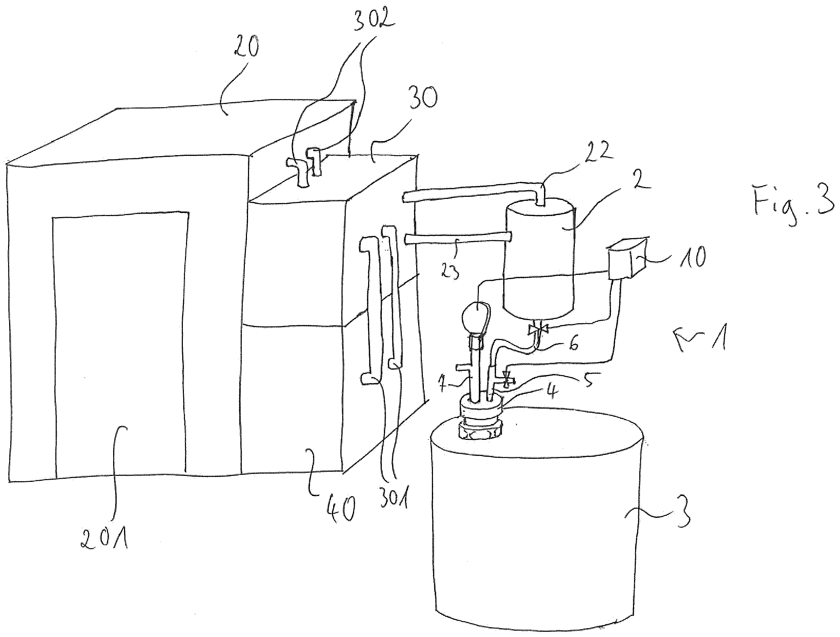

- Fig. 3:: eine schematische Darstellung eines Bäckereibackofens mit Kondensat-Abfüllstation.

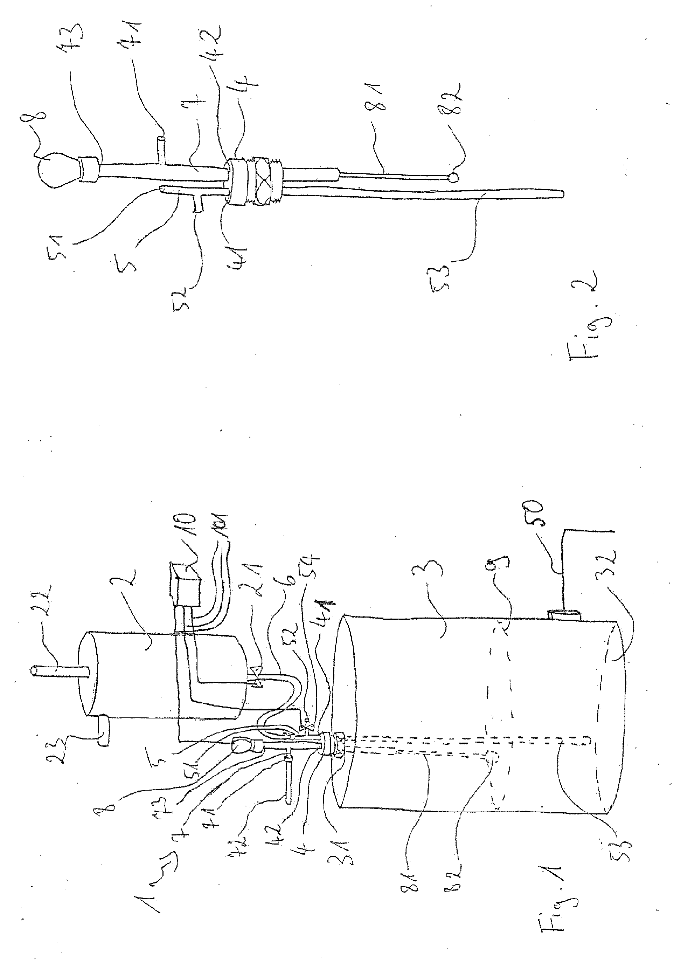

In Figur 1 ist eine Kondensat-Abfüllstation dargestellt, die in ihrer Gesamtheit mit der Bezugsziffer 1 gekennzeichnet ist. Sie umfasst einen ersten Behälter 2, aus dem ein Thermoölkondensat, das aus verunreinigtem Toluol besteht, mittels eines Auslassventils 21 abgelassen werden soll. Weiter weist die Kondensat-Abfüllstation 1 einen zweiten Behälter 3 auf, in dem das abgelassene Thermoöl aufgefangen wird. Dazu weist der zweite Behälter 3 eine Einlassöffnung 31 auf. Auf die Einlassöffnung 31 ist ein Verschluss 4 aufgeschraubt, der eine erste Durchlassöffnung 41 sowie eine zweite Durchlassöffnung 42 aufweist. In der ersten Durchlassöffnung 41 ist ein Füllrohr 5 angeordnet. Das innerhalb des zweiten Behälters 3 angeordnete Ende des Füllrohrs 5 reicht bis zu dem Boden 32 des zweiten Behälters 3. Es ist damit als Tauchrohr ausgebildet. Weiter weist das Füllrohr 5 eine Fluideinlassöffnung 51 auf. Die Fluideinlassöffnung 51 ist mittels einer Fluidleitung 6 mit dem Auslassventil 21 verbunden. Beim Öffnen des Auslassventils 21 fließt das Thermoölkondensat aus dem ersten Behälter 2 durch die Fluidleitung 6 und das Füllrohr 5 in den zweiten Behälter 3. Durch die Ausführung des Füllrohrs 5 als Tauchrohr bildet sich kein Sprühnebel aus Thermoölkondensat beim Umfüllen.

Während des Umfüllens fungiert die zweite Durchlassöffnung 42 als Entlüftung. In der zweiten Durchlassöffnung 42 ist dazu ein Entlüftungsrohr 7 vorgesehen. Dazu weist das Entlüftungsrohr 7 eine Entlüftungsöffnung 71 auf, die mit einer Entlüftungsleitung 72 verbunden ist. Mittels der Entlüftung können toxische Dämpfe des Kondensats abgeleitet werden, ohne dass sie die Umgebung der Kondensat-Abfüllstation kontaminieren.

Um die Entzündungsgefahr des Thermoölkondensats weiter zu verringern, ist an dem Füllrohr 5 ein Spülgaseinlass 52 vorgesehen. Der Spülgaseinlass 52 kann mittels eines Ventils 54 verschlossen werden. Durch den Spülgaseinlass 52 kann ein reaktionsträges Gas in den zweiten Behälter 3 eingeleitet werden. Als Spülgas kommen dabei Stickstoff oder Edelgase in Frage. Das Spülgas dient dabei dazu, die Konzentration des Sauerstoffs innerhalb des zweiten Behälters 3 zu senken. Damit wird die Entzündungsgefahr des Thermoöls innerhalb des zweiten Behälters 3 verringert.

Zur Kontrolle des Füllstandes des zweiten Behälters 3 ist eine Füllstandsanzeige 8 vorgesehen. Dazu weist das Entlüftungsrohr 7 eine Messöffnung 73 auf, an der die Füllstandsanzeige 8 angeordnet ist. Die Füllstandsanzeige 8 weist dabei eine Signalübertragungsleitung 81 auf, die in Form eines Drahtes ausgeführt ist. Der Draht reicht durch das Entlüftungsrohr 7 und die zweite Durchlassöffnung 42 in den zweiten Behälter 3 hinein. An dem am zweiten Behälter 3 angeordneten Ende des Drahtes 81 ist ein Schwimmkörper 82 vorgesehen. Der Schwimmkörper 82 weist eine geringere Dichte auf als das in den zweiten Behälter 3 einzulassende Thermoölkondensat. Damit schwimmt der Schwimmkörper 82 auf der Oberfläche 9 des Thermoölkondensats. Über die Signalübertragungsleitung 81 wird damit die Füllstandshöhe des Thermoölkondensats innerhalb des zweiten Behälters 3 an die Füllstandsanzeige 8 übertragen.

An den elektrisch leitenden Teilen der Kondensat-Abfüllstation 1 ist weiter eine Erdungsklemme 50 angeordnet. Mittels der Erdungsklemme 50 wird verhindert, dass die elektrisch leitenden Teile der Kondensat-Abfüllstation 1 sich aufladen und Funkenschlag generieren. Damit wird die Entzündungswahrscheinlichkeit des Thermoölkondensats bei dem Umfüllen weiter verringert.

Eine Steuereinrichtung 10 ist mittels Signalleitungen 101 mit dem Auslassventil 21, dem Spülgasventil 54 sowie der Füllstandsanzeige 8 verbunden. Mittels der Signale der Füllstandsanzeige 8 kann das Steuermodul 10 den Füllstand des zweiten Behälters 3 ermitteln. Mit dieser Information werden das Auslassventil 21 sowie das Spülgasventil 54 angesteuert. Ist der zweite Behälter 3 leer, wird zunächst Spülgas über den Spülgaseinlass 52 durch Öffnung des Spülgasventils 54 in den zweiten Behälter 3 eingelassen. Das Spülen des zweiten Behälters 3 erfolgt so lange, bis sichergestellt ist, dass die Sauerstoffkonzentration innerhalb des zweiten Behälters 3 auf ein ungefährliches Maß verringert worden ist. Dabei ist mit ungefährlichem Maß eine Konzentration des Sauerstoffs gemeint, bei der keine Entzündung des Thermoölkondensats mehr stattfinden kann. Dies kann entweder mittels nicht dargestellter Sensoren innerhalb des zweiten Behälters 3 erfolgen oder durch Schätzung. Danach überträgt die Steuereinrichtung 10 über eine Signalleitung 101 ein Öffnungssignal an das Auslassventil 21. Damit kann das Thermoölkondensat von dem ersten Behälter 2 in den zweiten Behälter 3 umgefüllt werden. Dabei besteht die Möglichkeit weiter Spülgas in den zweiten Behälter 3 einzulassen. Alternativ kann die Steuereinrichtung 10 die Schließung des Spülgasventils 10 veranlassen.

Sobald das Thermoölkondensat aus dem ersten Behälter 2 ausgelassen wurde, wird das Auslassventil 21 durch die Steuereinrichtung 10 verschlossen. Weiter wird das Spülgasventil 54 verschlossen, wenn der Spülvorgang während des Umfüllens fortgesetzt wurde. Die Kondensat-Abfüllstation ist zur Verwendung für Bäckereibacköfen vorgesehen. Dabei weist der Bäckereibackofen einen Backraum 20 mit einer Ofentür 201, ein Heizmodul 40 und ein Fluidfördersystem 30 auf. Das Fluidfördersystem 30 ist über Rohrverbindungen 301 mit dem Heizmodul 40 verbunden. Weiter weist das Fluidfördersystem 30 Rohrverbindungen 302 zum Backraum 20 auf. Das Thermoöl wird dabei zunächst über die Rohre 301 in das Heizmodul 40 gefördert und aufgeheizt. Von dem Heizmodul 40 wird das Thermoöl in die Wände des Backraums 20 eingeleitet und heizt den Innenraum des Backraums 20 auf. Über die Rohrverbindungen 302 gelangt das erkaltete Thermoöl wieder in das Fluidfördersystem 30. Zwecks Reinigung kann das Thermoöl über eine Leitung 23 in den ersten Behälter 2 eingeleitet werden. Durch die Kondensation werden Verunreinigungen des Thermoöls in den ersten Behälter 2 abgeschieden. Die Verunreinigungen verbleiben in dem Behälter 2. Das gereinigte Thermoöl fließt über eine Leitung 22 zurück in das Fluidfördersystem 30. Der erste Behälter 2 ist weiter Teil der Kondensat-Abfüllstation 1. Der zweite Behälter 3 kann dabei als Fass ausgeführt sein, um die Handhabung des Thermoölkondensats nach dem Umfüllen zu vereinfachen.

## Patentansprüche

1. Kondensat-Abfüllstation für Bäckereibacköfen umfassend: einen ersten Behälter (2) mit einem Auslassventil (21) und einem zweiten Behälter (3) mit einer Einlassöffnung (31),
**dadurch gekennzeichnet, dass**
die Kondensat-Abfüllstation (1) einen Verschluss (4) für den zweiten Behälter (3) mit einer ersten und zweiten Durchlassöffnung (41, 42), der an der Einlassöffnung (31) angeordnet ist;
ein Füllrohr (5), das in der ersten Durchlassöffnung (41) angeordnet ist, wobei das Füllrohr (5) außerhalb des zweiten Behälters (3) eine Fluideinlassöffnung (51) aufweist und bis zum Boden (32) des zweiten Behälters (3) reicht;
eine Fluidleitung (6) zwischen der Fluideinlassöffnung (51) und dem Auslassventil (21); und
ein Entlüftungsrohr (7) aufweist, das in der zweiten Durchlassöffnung (42) angeordnet ist.

2. Kondensat-Abfüllstation nach Anspruch 1,
**dadurch gekennzeichnet, dass**
der Verschluss (4) mit einer Füllstandsanzeige (8) versehen ist.

3. Kondensat-Abfüllstation nach Anspruch 2,
**dadurch gekennzeichnet, dass**
das Entlüftungsrohr (7) eine Messöffnung (73) aufweist, in der die Füllstandsanzeige (8) mit einem Schwimmkörper (82) und einem Signalübertragungselement (81) angeordnet ist.

4. Kondensat-Abfüllstation nach den Ansprüchen 1 bis 3
**dadurch gekennzeichnet, dass**
das Füllrohr (5) einen Spülgaseinlass (52) außerhalb des zweiten Behälters (3) umfasst, an dem vorzugsweise ein Spülgasventil (54) vorgesehen ist.

5. Kondensat-Abfüllstation nach Anspruch 4,
**dadurch gekennzeichnet, dass**
eine Steuervorrichtung (10) vorgesehen ist, die über Signalleitungen (101) mit dem Auslassventil (21), dem Spülgasventil (54) und der Füllstandsanzeige (8) verbunden ist, wobei das Auslassventil (21) und das Spülgasventil (54) fernsteuerbar sind.

6. Kondensat-Abfüllstation nach den Ansprüchen 1 bis 5,
**dadurch gekennzeichnet, dass**
Erdungsklemmen (50) an den elektrisch leitenden Teilen der Kondensat-Abfüllstation (1) vorgesehen sind.

7. Kondensat-Abfüllstation nach einem der vorhergehenden Ansprüche,
**dadurch gekennzeichnet, dass**
der zweite Behälter (3) als Wechselbehälter, vorzugsweise als ein Fass, ausgebildet ist.

8. Kondensat-Abfüllstation nach einem der vorhergehenden Ansprüche,
**dadurch gekennzeichnet, dass**
die Kondensat-Abfüllstation (1) für Wärmeträgeranlagen vorgesehen ist, die mit organischen Fluiden als Wärmeträgermedium befüllt sind.

9. Bäckereibackofen, der einen Backraum (20) mit einer Ofentür (201), ein Heizmodul (40), ein Fluidfördersystem (30) und eine Kondensat-Abfüllstation (1) für Bäckereibacköfen, **dadurch gekennzeichnet, dass**
die Kondensat-Abfüllstation (1) nach einem der Ansprüche 1 bis 8 ausgebildet ist.

## Claims

1. Condensate discharge station for bakery ovens, comprising: a first container (2) with an outlet valve (21), and a second container (3) with an inlet opening (31),
**characterized in that**
the condensate discharge station (1) has a closure (4) for the second container (3), which closure has a first and a second passage opening (41, 42) and is arranged on the inlet opening (31);
a filling tube (5) which is arranged in the first passage opening (41), wherein the filling tube (5) has a fluid inlet opening (51) outside the second container (3) and extends as far as the bottom (32) of the second container (3) ;
a fluid line (6) between the fluid inlet opening (51) and the outlet valve (21); and
a venting tube (7) which is arranged in the second passage opening (42).

2. Condensate discharge station according to Claim 1,
**characterized in that**
the closure (4) is provided with a fill level indicator (8) .

3. Condensate discharge station according to Claim 2,
**characterized in that**
the venting tube (7) has a measurement opening (73) in which the fill level indicator (8), which has a float body (82) and a signal transmission element (81), is arranged.

4. Condensate discharge station according to Claims 1 to 3,
**characterized in that**
the filling tube (5) comprises, outside the second container (3), a flushing-gas inlet (52) at which a flushing-gas valve (54) is preferably provided.

5. Condensate discharge station according to Claim 4,
**characterized in that**
provision is made of a control apparatus (10) which is connected via signal lines (101) to the outlet valve (21), to the flushing-gas valve (54) and to the fill level indicator (8), wherein the outlet valve (21) and the flushing-gas valve (54) are remotely controllable.

6. Condensate discharge station according to Claims 1 to 5,
**characterized in that**
earthing terminals (50) are provided on the electrically conductive parts of the condensate discharge station (1).

7. Condensate discharge station according to one of the preceding claims,
**characterized in that**
the second container (3) is configured as an exchangeable container, preferably in the form of a barrel.

8. Condensate discharge station according to one of the preceding claims,
**characterized in that**
the condensate discharge station (1) is provided for heat carrier systems which are filled with organic fluids as heat carrier medium.

9. Bakery oven, having a baking chamber (20) with an oven door (201), having a heating module (40), having a fluid-conveying system (30) and having a condensate discharge station (1) for bakery ovens, **characterized in that** the condensate discharge station (1) is designed according to one of Claims 1 to 8.

## Revendications

1. Station de remplissage de condensat pour fours de boulangerie, comprenant : un premier récipient (2) doté d'une soupape de sortie (21) et un deuxième récipient (3) doté d'une soupape d'entrée (31),
**caractérisée en ce que**
la station de remplissage de condensat (1) présente un obturateur (4) pour le deuxième récipient (3) ayant une première et une deuxième ouverture de passage (41, 42) et qui est disposé au niveau de l'ouverture d'entrée (31) ; un tuyau de remplissage (5) qui est disposé dans la première ouverture de passage (41), le tuyau de remplissage (5) présentant à l'extérieur du deuxième récipient (3) une ouverture d'entrée de fluide (51) et allant jusqu'au fond (32) du deuxième récipient (3) ;
une conduite de fluide (6) entre l'ouverture d'entrée de fluide (51) et la soupape de sortie (21) ; et
un tuyau de ventilation (7) qui est disposé dans la deuxième ouverture de passage (42).

2. Station de remplissage de condensat selon la revendication 1, **caractérisée en ce que** l'obturateur (4) est muni d'une jauge de niveau (8).

3. Station de remplissage de condensat selon la revendication 2, **caractérisée en ce que** le tuyau de ventilation (7) présente une ouverture de mesure (73) dans laquelle la jauge de niveau (8) est disposée avec un flotteur (82) et un élément de transmission de signal (81).

4. Station de remplissage de condensat selon l'une quelconque des revendications 1 à 3, **caractérisée en ce que** le tuyau de remplissage (5) comprend une entrée de gaz de purge (52) à l'extérieur du deuxième récipient (3) sur lequel une soupape de gaz de purge (54) est prévue de préférence.

5. Station de remplissage de condensat selon la revendication 4, **caractérisée en ce qu'**un dispositif de commande (10) est prévu qui est relié par des lignes de signal (101) à la soupape de sortie (21), à la soupape de gaz de purge (54) et à la jauge de niveau (8), la soupape de sortie (21) et la soupape de gaz de purge (54) pouvant être commandées à distance.

6. Station de remplissage de condensat selon l'une quelconque des revendications 1 à 5, **caractérisée en ce que** des bornes de terre (50) sont prévues sur les parties électroconductrices de la station de remplissage de condensat (1).

7. Station de remplissage de condensat selon l'une quelconque des revendications précédentes, **caractérisée en ce que** le deuxième récipient (3) est réalisé sous forme de récipient interchangeable, de préférence sous forme de fût.

8. Station de remplissage de condensat selon l'une quelconque des revendications précédentes, **caractérisée en ce que** la station de remplissage de condensat (1) est prévue pour des installations utilisant des caloporteurs, qui sont remplies de fluides organiques comme agent caloporteur.

9. Four de boulangerie, comprenant un espace de cuisson (20) avec une porte de four (201), un module de chauffage (40), un système de transport de fluide (30) et une station de remplissage de condensat (1) pour fours de boulangerie, **caractérisé en ce que** la station de remplissage de condensat (1) est réalisée selon l'une quelconque des revendications 1 à 8.
